# EUROPEAN PATENT APPLICATION

(11) **EP 3 882 826 A1**
(43) Date of publication of application: **22.09.2021**
(21) Application number: 19900330.2
(22) Date of filing: 16.12.2019
(51) Int. Cl.: G06Q 10/00

(54) **SELECTION SYSTEM OF MAINTENANCE COMPONENT OF WORKING MACHINE**

(30) Priority: 21.12.2018 JP 2018239829
(71) Applicant: Hitachi Construction Machinery Co., Ltd., Tokyo 110-0015 (JP)
(72) Inventor: INOSE, Satoshi, Tokyo 110-0015 (JP); YOSHIDA, Tomohiro, Tokyo 110-0015 (JP); SAWADA, Kazuhisa, Tokyo 110-0015 (JP); OKU, Shinichi, Tokyo 110-0015 (JP); TAKAMI, Hiroki, Tokyo 110-0015 (JP); KAKUTANI, Yuji, Tokyo 100-8288 (JP)
(74) Representative: Manitz Finsterwald Patent- und Rechtsanwaltspartnerschaft mbB
(86) International application number: PCT/JP2019/049171
(87) International publication number: WO 2020/129898

(57) **Abstract**

There is provided a server that includes: an inspection item/main part correspondence table in which inspection items of the work machine and main parts of the work machine are associated; an inspection item list acquisition unit acquiring an inspection item list of the inspection target machine based on information about the inspection target machine received from the terminal; and a main part list acquisition unit acquiring a main part list in which the service parts are enumerated, being associated with the inspection items of the inspection target machine, based on the inspection item/main part correspondence table. The main part list acquisition unit transmits the acquired main part list to the terminal via the communication circuit as the selection information about the service parts.

## Description

### Technical Field

The present invention relates to a service part selection system for a work machin such as a carrier and a loader for performing various kinds of work at a civil engineering construction site and the like, and in particular to a technique for supporting selection of parts to be exchanged at the time of exchanging parts based on an inspection result of the work machine.

### Background Art

As for work machines represented by a hydraulic shovel and the like, the same model can be adapted to be operated for general purposes at various places and scenes, including civil engineering construction as well as resource development, demolition of buildings and vehicles, and sorting of industrial wastes, by replacing, for example, an attachment. Due to such a special characteristic from a viewpoint of operation, there are various load situations even for the same model, and there is a wide range of phenomena that cause a failure. Further, there are many cases where parts required for repair are not identified unless work such as disassembly is actually performed. In addition, since an operation stop period of a work machine is directly associated with delay in work, promptness is strongly required in responding to a failure of a work machine. Therefore, there often occurs such a case that after roughly estimating a failure situation, repair parts are ordered and obtained more than those necessary for the estimated failure situation, repair work is then accomplished, and unused parts are returned.

Time and effort wasted for such ordering and return of unnecessary parts leads to reduction in efficiency of maintenance work. If the process of ordering and returning unnecessary parts is usually performed, it may influence the promptness of response to a failure. Selecting repair parts necessary for restoration requires to specify each of the necessary parts from among a huge amount of relevant information, and, therefore, such selection is difficult work requiring sufficient experience. In some cases, it takes a period as long as several weeks.

In order to solve such a problem, Patent Document 1 discloses a work machine repair part selection support system in which, when a replacement part required for maintenance of a work machine is selected, parts related to the replacement part can be also ordered.

### Prior Art Document

### Patent Document

Patent Document 1: Japanese Patent Laid-Open No. 2018-92259

### Summary of the Invention

### Problems to be solved by the Invention

In the conventional system, however, in the case where replacement of a part is to be performed based on an inspection result of a work machine, selection of the replacement part required for maintenance of the work machine is determined by the maintenance worker taking into consideration the inspection result and the like, and hence the selection depends on the worker's know-how. Therefore, excess or deficiency may occur for parts to be ordered, depending on the experience of the maintenance worker of the work machine. Further, for a maintenance worker with a little experience, the selection itself of the replacement part required for maintenance of the work machine is difficult.

The present invention has been made in view of such a problem, and an object of the invention is to provide a work machine service part selection system that is capable of enhancing appropriateness of selection of service parts of a work machine and enabling ordering of the parts without excess or deficiency, without depending on maintenance worker's know-how, to improve promptness of maintenance work for the work machine.

### Means for Solving the Problems

In order to achieve the above object, a work machine service part selection system of the present invention is a work machine service part selection system including a server, the server providing selection information about service parts for an inspection target machine, which is a work machine and is to be an inspection target, to a terminal via a communication circuit, wherein the server includes: an inspection item/main part correspondence table in which inspection items of the work machine and main parts of the work machine are associated; an inspection item list acquisition unit acquiring an inspection item list of the inspection target machine based on information about the inspection target machine received from the terminal; and a main part list acquisition unit acquiring a main part list in which the service parts are enumerated, being associated with the inspection items of the inspection target machine, based on the inspection item/main part correspondence table; wherein the main part list acquisition unit transmits the acquired main part list to the terminal via the communication circuit as the selection information about the service parts.

### Advantageous Effects of the Invention

According to a work machine service part selection system according to the present invention, it is possible to enhance appropriateness of selection of service parts of a work machine and related parts that are related to the service parts and enable ordering of the parts without excess or deficiency, without depending on maintenance worker's know-how, to improve promptness of maintenance work for the work machine.

### Brief Description of the Drawings

FIG. 1 is a schematic diagram showing an overall configuration of an inspection system using a work machine service part selection system according to an embodiment of the present invention;
FIG. 2 is a block diagram showing an outline of the work machine service part selection system according to the embodiment of the present invention and the inspection system using the selection system;
FIG. 3 shows failure risk data stored in a failure risk data table of the selection system according to the embodiment of the present invention;
FIG. 4 shows an inspection item list stored in an inspection item data table of the selection system according to the embodiment of the present invention;
FIG. 5 shows an inspection item/main part correspondence table data stored in an inspection item/main part correspondence table of the selection system according to the embodiment of the present invention;
FIG. 6 shows a main parts/accessory parts correspondence table data stored in a main parts/accessory parts correspondence table of the selection system according to the embodiment of the present invention;
FIG. 7 shows a main parts master list stored in a main part master table of the selection system according to the embodiment of the present invention;
FIG. 8 shows a proposal history list inspection item/main part correspondence table data stored in a proposal history table of the selection system according to the embodiment of the present invention;
FIG. 9 shows inspection item information displayed on an inspection item screen of a mobile terminal;
FIG. 10 shows main part list information displayed on a main part list screen of the mobile terminal;
FIG. 11 shows accessory part list information displayed on an accessory part list screen of the mobile terminal;
FIG. 12 shows correspondence table data maintenance information displayed on a correspondence table data maintenance screen of a fixed terminal;
FIG. 13 shows an operation data acquisition flow in the embodiment of the present invention;
FIG. 14 shows a failure risk calculation flow in the embodiment of the present invention;
FIG. 15 shows a process flow until inspection items are displayed on the inspection item screen of the mobile terminal in the embodiment of the present invention;
FIG. 16 shows a process flow performed when a worker inspects a heavy machine in the embodiment of the present invention;
FIG. 17 shows a process flow performed on a server side after inspection by the worker in the embodiment of the present invention;
FIG. 18 is a process flowchart about a proposal history creation method in the selection system according to the embodiment of the present invention;
FIG. 19 is a process flowchart about another proposal history creation method in the selection system according to the embodiment of the present invention; and
FIG. 20 shows a specific maintenance process flow of the inspection item/main part correspondence table data in the selection system according to the embodiment of the present invention.

### Mode for Carrying out the Invention

An embodiment of a work machine service part selection system according to the present invention will be described below in detail based on examples with reference to drawings. Note that the present invention is not limited to content described below but can be arbitrarily changed and practiced within a range not changing the spirit of the invention. Further, any of various numerical values used in the examples shows a mere example and can be variously changed as necessary.

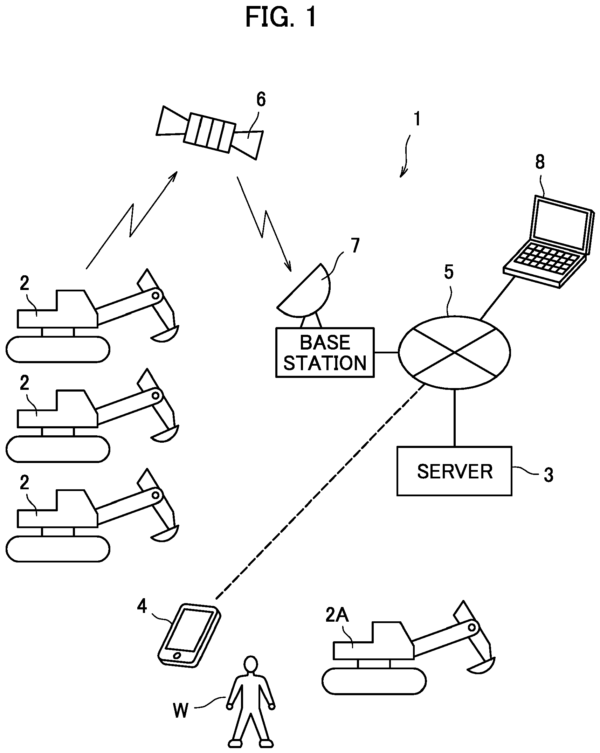

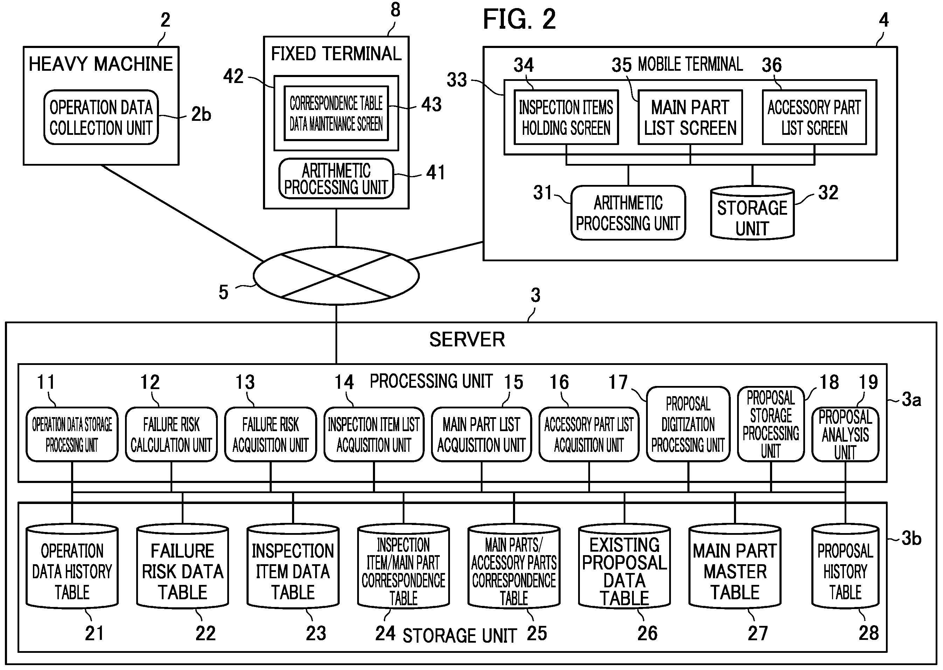

Hereinafter, the work machine service part selection system according to the present embodiment and an overall configuration of an inspection system using the selection system will be described with reference to FIGS. 1 to 12. Here, FIG. 1 is a schematic diagram showing an overall configuration of the inspection system using the work machine service part selection system according to the present embodiment. FIG. 2 is a block diagram showing an outline of the work machine service part selection system according to the present embodiment and the inspection system using the selection system.

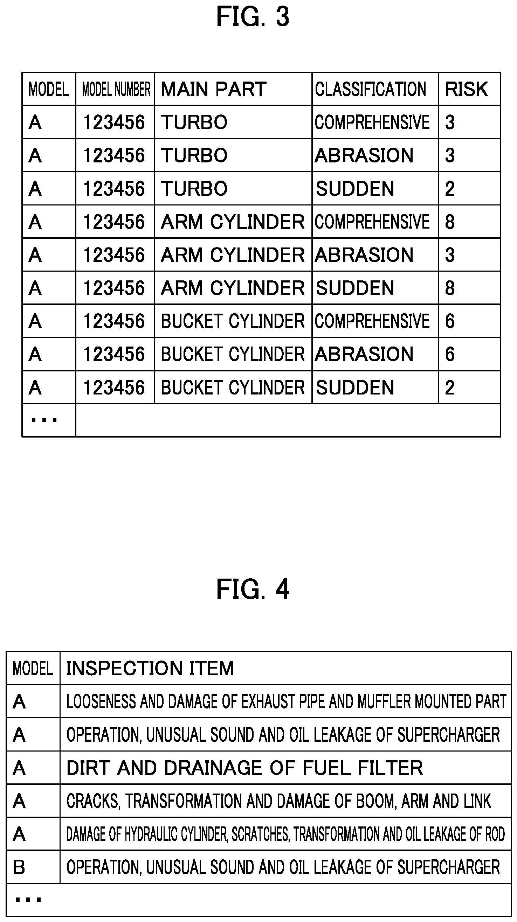

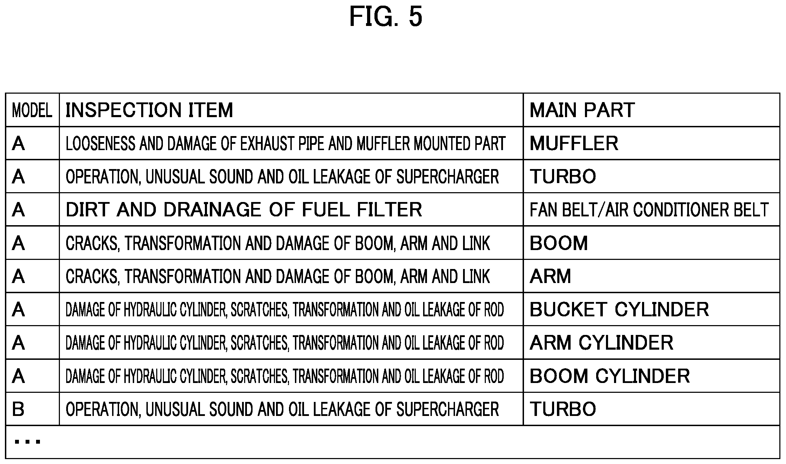

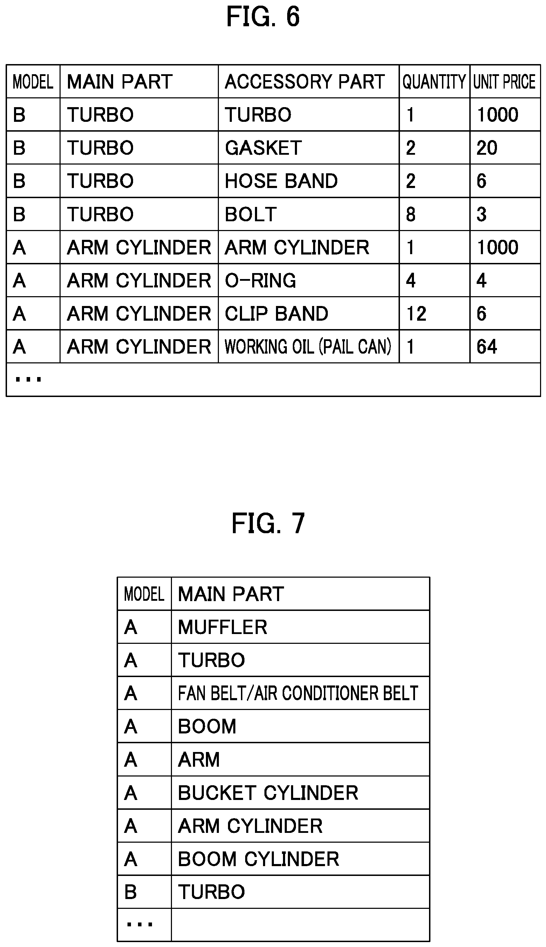

Furthermore, FIG. 3 shows failure risk data stored in a failure risk data table of the selection system according to the present embodiment. FIG. 4 shows an inspection item list stored in an inspection item data table of the selection system according to the present embodiment. FIG. 5 shows an inspection item/main part correspondence table data stored in an inspection item/main part correspondence table of the selection system according to the present embodiment. FIG. 6 shows a main parts/accessory parts correspondence table data stored in a main parts/accessory parts correspondence table of the selection system according to the present embodiment.

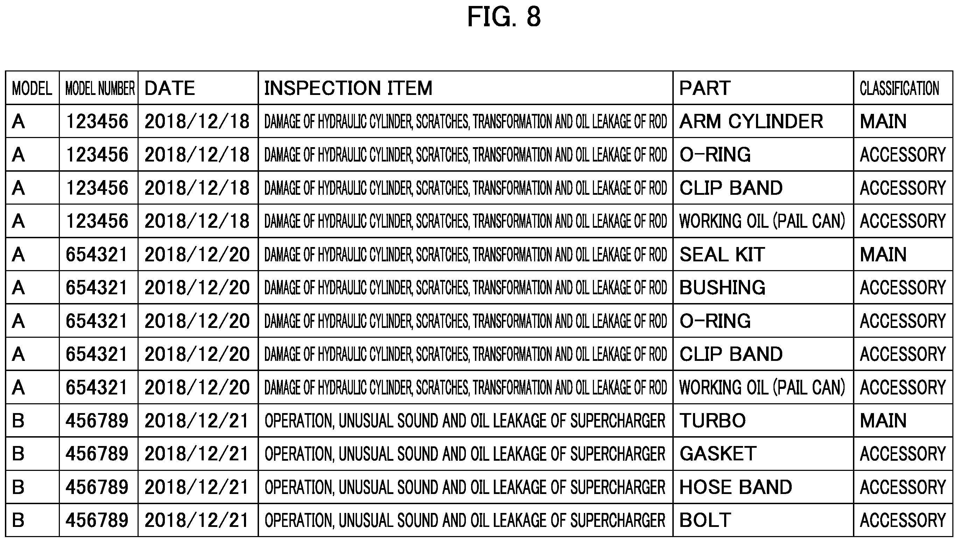

Further, FIG. 7 shows a main parts master list stored in a main part master table of the selection system according to the present embodiment. FIG. 8 shows a proposal history list inspection item/main part correspondence table data stored in a proposal history table of the selection system according to the present embodiment.

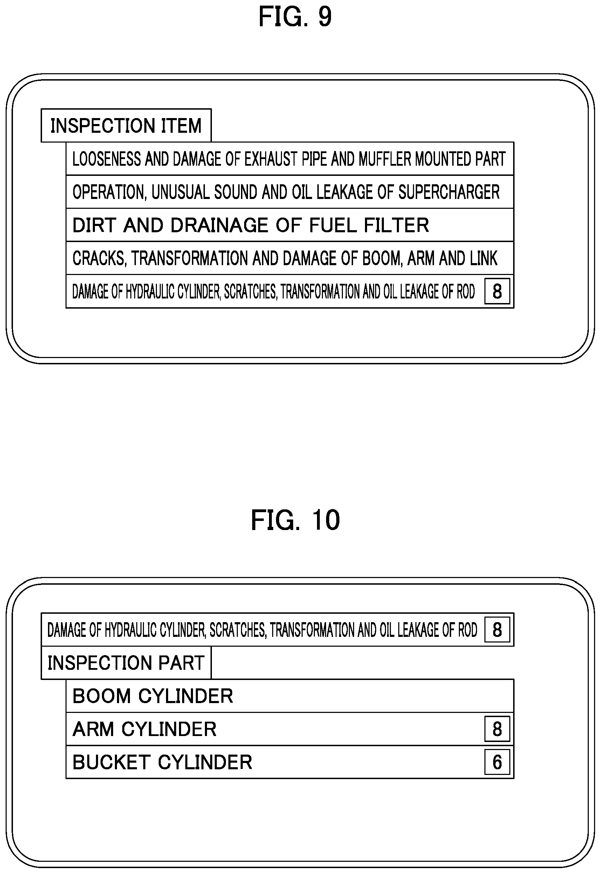

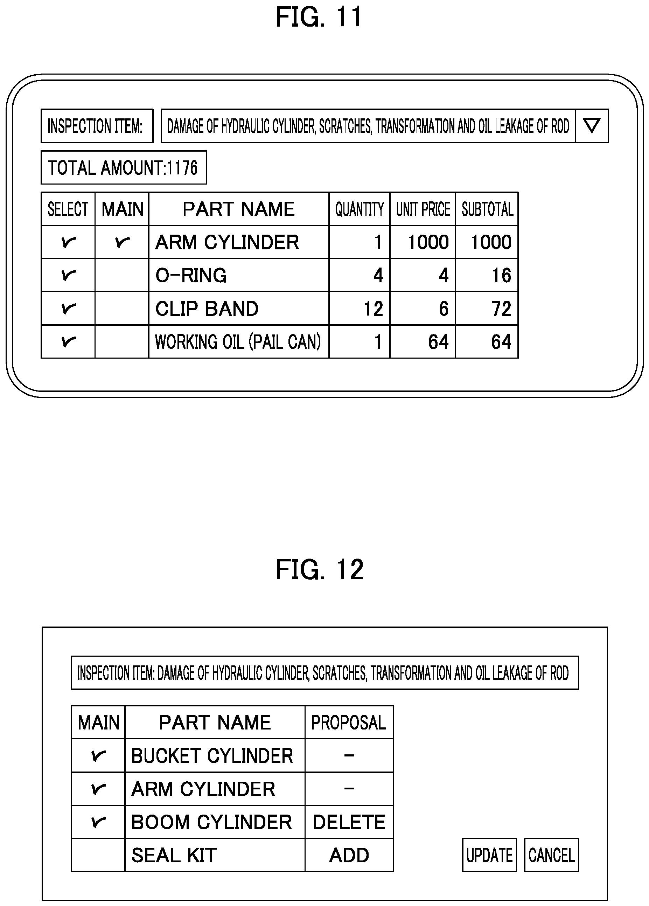

FIG. 9 shows inspection item information displayed on an inspection item screen of a mobile terminal. FIG. 10 shows main part list information displayed on a main part list screen of the mobile terminal. FIG. 11 shows accessory part list information displayed on an accessory part list screen of the mobile terminal. FIG. 12 shows correspondence table data maintenance information displayed on a correspondence table data maintenance screen of a fixed terminal.

As shown in FIG. 1, an inspection system 1 of the present embodiment has a work machine service part selection system provided with a server 3 that stores and processes various kinds of data of heavy machines 2, which are work machines, a mobile terminal 4 operated by a worker W, and a communication circuit 5 for communicably connecting the server 3 and the mobile terminal 4. Further, the inspection system 1 has a communication satellite 6 for enabling transmission of operation data (including work information, position information and the like) of the plurality of heavy machines 2 to the server 3 via the communication circuit 5, and a base station 7 for receiving various kinds of data from the communication satellite 6. Furthermore, the inspection system 1 has a fixed terminal 8 for performing work of accessing data accumulated in the server 3 from outside, updating the data, and the like.

According to such a configuration, in the inspection system 1 of the present embodiment, the operation data of the heavy machines 2 is transmitted to the server 3 via the communication satellite 6, the base station 7 and the communication circuit 5, and the operation data is stored in the server 3. The worker W obtains information about a heavy machine 2A, which is an inspection target machine among work machines, and performs inspection work, proposal of replacement parts and the like, using the mobile terminal 4. Furthermore, a user of the fixed terminal 8 is enabled to process and update various kinds of data stored in the server 3 as necessary.

The heavy machines 2 are assumed to be hydraulic shovels to perform loading work in the present embodiment but are not limited thereto. The heavy machines 2 may be, for example, dump trucks which are carriers, various kinds of roller machines, wheel loaders and the like. Furthermore, the work machines are not limited to the heavy machines 2 but include various kinds of apparatuses used at a civil engineering construction site. Further, as shown in FIG. 2, each heavy machine 2 is provided with an operation data collection unit 2b for collecting operation data. Note that, though each heavy machine 2 is provided with various kinds of collection units for collecting data other than the operation data and various kinds of work units, only the operation data collection unit 2b related to the present embodiment is shown for convenience of description and will be described below.

The operation data collection unit 2b collects sensor information detected by a sensor (not shown) of the heavy machine 2 and position information received from a position satellite (not shown) as the operation data of the heavy machine 2. Further, the operation data collection unit 2b causes the collected operation data of the heavy machine 2 to pass through the communication satellite 6 and the base station 7 to transmit the operation data to the server 3 via the communication circuit 5.

As shown in FIG. 2, the server 3 is provided with a processing unit 3a and a storage unit 3b. The processing unit 3a is configured, for example, with a central processing unit (CPU) that performs various kinds of arithmetic processing, and it is a device for executing various kinds of processes in the server 3. The storage unit 3b is configured, for example, with a dynamic random-access memory (DRAM), and it is a device for storing various kinds of data supplied from outside.

Further, as shown in FIG. 2, the processing unit 3a includes an operation data storage processing unit 11, a failure risk calculation unit 12, a failure risk acquisition unit 13, an inspection item list acquisition unit 14, a main part list acquisition unit 15, an accessory part list acquisition unit 16, a proposal digitization processing unit 17, a proposal storage processing unit 18 and a proposal analysis unit 19. The storage unit 3b includes an operation data history table 21, a failure risk data table 22, an inspection item data table 23, an inspection item/main part correspondence table 24, a main parts/accessory parts correspondence table 25, an existing proposal data table 26, a main part master table 27 and a proposal history table 28.

The operation data storage processing unit 11 receives pieces of operation data transmitted from the plurality of heavy machines 2 and stores the pieces of operation data into the operation data history table 21 in a form compatible with a predetermined format. In other words, the operation data storage processing unit 11 classifies the received pieces of operation data of the heavy machines 2 and stores the pieces of data into predetermined storage places of the operation data history table 21. An operation data list recorded in the operation data history table 21 includes, for example, general information such as working days, working hours, working places and working content of the heavy machines 2.

The failure risk calculation unit 12 refers to the operation data list stored in the operation data history table 21 and calculates failure risks for each of models of the heavy machines 2. For example, the failure risk calculation unit 12 may calculate the failure risks using a predetermined failure rate calculation function defined in advance and further using the operation data. Note that the failure risk calculation unit 12 may acquire maintenance information about the heavy machines 2 to use the maintenance information at the time of calculating the failure risk.

Further, the failure risk calculation unit 12 stores the calculated failure risks of each heavy machine 2 into the failure risk data table 22 as failure risk data. Here, the failure risk data is configured, for example, "model", "model number", "main part", "classification" and "risk" fields as shown in FIG. 3. The "model" indicates a product name of each heavy machine 2; the "model number" indicates a number registered for each model, and the "main part" indicates a name of a main part constituting the heavy machine 2. For example, parts indispensable for a hydraulic shovel, such as a turbo, an arm cylinder and a bucket cylinder, are written as main parts. Further, the "classification" includes three types, "comprehensive", "abrasion" and "sudden". The "abrasion" indicates a failure such as deterioration over time, and the "sudden" indicates a failure that suddenly occurs over time, and the "comprehensive" indicates a comprehensive failure including these. Furthermore, the "risk" indicates a failure risk calculated by the failure risk calculation unit 12 based on the operation data list. Note that, the larger the value of the "risk" is, the higher the failure risk is.

The failure risk acquisition unit 13 reads out the failure risk data stored in the failure risk data table 22 and transmits the failure risk data to the mobile terminal 4 via the communication circuit 5. Further, the inspection item list acquisition unit 14 stores inspection items of the heavy machine 2A transmitted from the mobile terminal 4 into the inspection item data table 23 as inspection item data and, furthermore, updates the inspection item data stored in the inspection item data table 23. The inspection item list acquisition unit 14 can also read out the inspection items stored in the inspection item data table 23 and transmit the inspection items to the mobile terminal 4 via the communication circuit 5.

The inspection item data stored in the inspection item data table 23 is configured with "model" and "inspection item" fields as shown in FIG. 4. For each model (for each heavy machine 2), predetermined inspection items are specified. For example, as shown in FIG. 4, inspection items such as "looseness and damage of exhaust pipe and muffler mounted part", "operation, unusual sound and oil leakage of supercharger", "dirt and drainage of fuel filter", "cracks, transformation and damage of boom, arm and link", "damage of hydraulic cylinder, scratches, transformation and oil leakage of rod" are specified for each model. Further, an inspection item specific to each model is naturally specified. The inspection items may be updated (added and deleted) as necessary.

The main part list acquisition unit 15 acquires and lists up pieces of information about main parts from data stored in the inspection item/main part correspondence table 24. Here, the data stored in the inspection item/main part correspondence table 24 is configured with "model", "inspection item" and "main part" fields as shown in FIG. 5. Main parts to be inspected are specified, being associated with inspection items of each model. Specifically, "muffler" is associated with "looseness and damage of exhaust pipe and muffler mounted part"; "turbo" is associated with "operation, unusual sound and oil leakage of supercharger"; "fan belt/air-conditioner belt" is associated with "dirt and drainage of fuel filter"; "boom" and "arm" are associated with "cracks, transformation and damage of boom, arm and link"; and "bucket cylinder", "arm cylinder" and "boom cylinder" are associated with "damage of hydraulic cylinder, scratches, transformation and oil leakage of rod". Due to such a table configuration, the main part list acquisition unit 15 can acquire names of main parts that are important at the time of performing inspection items.

The accessory part list acquisition unit 16 acquires and lists up pieces of information about accessory parts from data stored in the main parts/accessory parts correspondence table 25. Here, the data stored in the main parts/accessory parts correspondence table 25 is configured with "model", "main part", "accessory part", "quantity" and "unit price" fields as shown in FIG. 6. "Accessory" parts also include main parts themselves and, furthermore, indicate the service parts related to the main parts. Specifically, for a turbo which is a main part, "turbo" which is the main part itself, and "gasket", "hose band" and "bolt" which are related parts of the turbo are associated. Similarly, in FIG. 6, for an arm cylinder which is a main part, "arm cylinder" which is the main part itself, and "O-ring", "clip band" and "working oil (pail can)" which are related parts of the arm cylinder are associated.

The "quantity" in FIG. 6 indicates the quantity of each accessory part related to one main part. Furthermore, the "unit price" in FIG. 6 indicates the unit price of each accessory part itself. Note that the above data can be appropriately updated and modified. Then, for example, when the turbo is selected as a main part, the accessory part list acquisition unit 16 acquires "two gaskets, two hose bands and eight bolts" as information about related accessory parts.

The proposal digitization processing unit 17 has a function of creating a document for proposing parts to be replaced, according to a result of inspection of the heavy machine 2A by the worker W to be described later. For example, in this proposal, a situation including content of the inspection, parts to be ordered, including main parts and accessory parts, a sum and the like are written as items of a repair proposal.

Further, the proposal digitization processing unit 17 extracts an accessory part list and inspection items from existing proposal data stored in the existing proposal data table 26. Furthermore, the proposal digitization processing unit 17 identifies main parts based on the main parts master list stored in the main part master table 27. In other words, since the existing proposal data is data in which main parts and accessory parts are written, the proposal digitization processing unit 17 easily extracts the main parts from the data. Here, the main parts master list stored in the main part master table 27 is configured with "model" and "main part" fields as shown in FIG. 7; and main parts for each model are written being associated with the model. In the present embodiment, as main parts of a hydraulic shovel, "muffler", "turbo", "fan belt/air conditioner belt", "boom", "arm", "bucket cylinder", "arm cylinder" and "boom cylinder" are enumerated.

The proposal storage processing unit 18 stores the proposal created by the proposal digitization processing unit 17 into the existing proposal data table 26. Further, the proposal storage processing unit 18 stores the main parts, the accessory parts which are other parts and the inspection items extracted by the proposal digitization processing unit 17, and other information about inspection (the model, the model number and the date) into the proposal history table 28 as a proposal history list. As shown in FIG. 8, the proposal history list is configured with "model", "model number", "date", "inspection item", "part" and "classification" fields. By referring to the proposal history list, it is possible to confirm, for the heavy machine 2A, when and which inspection was performed, and which parts were proposed based on a result of the inspection. Note that the "classification" is a field for classifying whether a part is a main part or an accessory part.

The proposal analysis unit 19 refers to proposal history lists, which are past inspection results stored in the proposal history table 28 and analyzes the frequency of "an inspection item" and "a main part" appearing in the lists, being associated with each other. For example, in FIG. 8, a cumulative number of proposals in which "damage of hydraulic cylinder, scratches, transformation and oil leakage of rod" are specified as an inspection item, and "arm cylinder" is specified as a part is calculated. Then, if the frequency of appearance, which is the calculated cumulative number, is smaller than a predetermined number within a predetermined period, the proposal analysis unit 19 updates the inspection item/main part correspondence table 24 and eliminates the correspondence relationship between the relevant "inspection item" and "main part". Note that the process for the elimination may be automatically performed, or a guidance recommending the update process may be transmitted to the fixed terminal 8 so that an administrator of the server 3 can respond.

As shown in FIG. 2, the mobile terminal 4 is provided with an arithmetic processing unit 31 that executes various kinds of operations and processes, a storage unit 32 that stores various kinds of data and a display unit 33. The mobile terminal 4 may be a dedicated terminal used in the inspection system 1 or may be a general smartphone. Further, the mobile terminal 4 includes an inspection item screen 34, a main part list screen 35 and an accessory part list screen 36 to be displayed on the display unit 33. Note that, though the mobile terminal 4 also includes various kinds of components (a communication device, sensors and the like) other than the above components, only the members and the like that are especially related to the present embodiment are shown for convenience and will be described below.

The arithmetic processing unit 31 has a function of comprehensively controlling various kinds of parts constituting the mobile terminal 4 and programs. The arithmetic processing unit 31 is configured, for example, with a CPU (central processing unit) that performs various kinds of arithmetic processing, and it is a device for executing various kinds of processes in the mobile terminal 4. The storage unit 32 is configured, for example, with a dynamic random-access memory (DRAM), and it is a device in which various kinds of data supplied from outside and various kinds of programs executed on the mobile terminal 4 are stored.

On the inspection item screen 34, inspection item information as shown in FIG. 9 are displayed. Specifically, for a hydraulic shovel, which is the heavy machines 2 in the present embodiment, as a target, "looseness and damage of exhaust pipe and muffler mounted part", "operation, unusual sound and oil leakage of supercharger", "dirt and drainage of fuel filter", "cracks, transformation and damage of boom, arm and link", "damage of hydraulic cylinder, scratches, transformation and oil leakage of rod" are displayed. Further, as shown in FIG. 9, if a failure risk has been already calculated for each inspection item, and any failure risk is equal to or above a predetermined value, a numerical value about the failure risk is displayed next to the inspection item. Referring to the numerical values about the failure risks, the worker W can perform inspection in descending order of the numerical value and is enabled to efficiently perform the inspection itself.

On the main part list screen 35, main part list information in which main parts, which are service parts, are listed up as shown in FIG. 10 is displayed. Specifically, an inspection item and main parts associated with the inspection item are displayed. Further, as shown in FIG. 10, if a failure risk has been already calculated for each main part, and any failure risk is equal to or above a predetermined value, a numerical value about the failure risk is displayed next to the name of the main part. Referring to the numerical values about the failure risks, the worker W can perform inspection in descending order of the numerical value and is enabled to efficiently perform the inspection itself.

On the accessory part list screen 36, accessory part list information in which accessory parts, which are service parts, are listed up as shown in FIG. 11 is displayed. Specifically, an inspection item, and a main part and accessory parts associated with the inspection item are displayed. Especially in the present embodiment, "select", "main", "part name", "quantity", "unit price" and "subtotal" fields are provided at a part where a list of parts is displayed. The "select" field is a check box for selecting whether the worker W proposes a displayed part as a replacement part or not. The "main" field is a check box for determining whether the part is a main part or not. A part for which this field is checked is a main part, and a part for which this field is not checked is an accessory part. As for the "quantity" and "unit price" fields, the worker W can input a numerical value for change.

The inspection item can be selected, and it is possible to select another inspection item in a field on the right side of display of the item. Between the inspection item and the part where the list of parts is displayed, a total amount of parts to be ordered.

As shown in FIG. 2, the fixed terminal 8 is provided with an arithmetic processing unit 41 and a display unit 42. Further, the fixed terminal 8 includes a correspondence table data maintenance screen 43 to be displayed on the display unit 42. Note that, though the fixed terminal 8 also includes various kinds of components (a storage unit, a communication device, sensors and the like) other than the above components, only the members and the like that are especially related to the present embodiment are shown for convenience and will be described below.

The arithmetic processing unit 41 has a function of comprehensively controlling various kinds of parts constituting the fixed terminal 8 and programs. The arithmetic processing unit 41 is configured, for example, with a CPU (central processing unit) that performs various kinds of arithmetic processing, and it is a device for executing various kinds of processes in the mobile terminal 4.

On the correspondence table data maintenance screen 43, correspondence table data maintenance information as shown in FIG. 12 is displayed. Specifically, an inspection item and information about parts are displayed as the correspondence table data maintenance information. The part of information about the parts is configured with "main", "part name" and "proposal" fields. Buttons for whether or not to execute proposed content and update the information (an update button and a cancel button) are displayed next to the part of the information about the parts. For example, in FIG. 12, a proposal of deleting boom cylinder which is a main part and adding seal kit which is an accessory part is made for the inspection item of "damage of hydraulic cylinder, scratches, transformation and oil leakage of rod". This proposal is displayed based on a result of the analysis by the proposal analysis unit 19 described above. If the user of the fixed terminal 8 (the administrator of the server 3) selects update, the data stored in the inspection item/main part correspondence table 24 is updated. Thereby, it is possible to modify correspondence relationships between inspection items and main parts to be more appropriate, and it is possible to improve appropriateness of extracting main parts based on an inspection item.

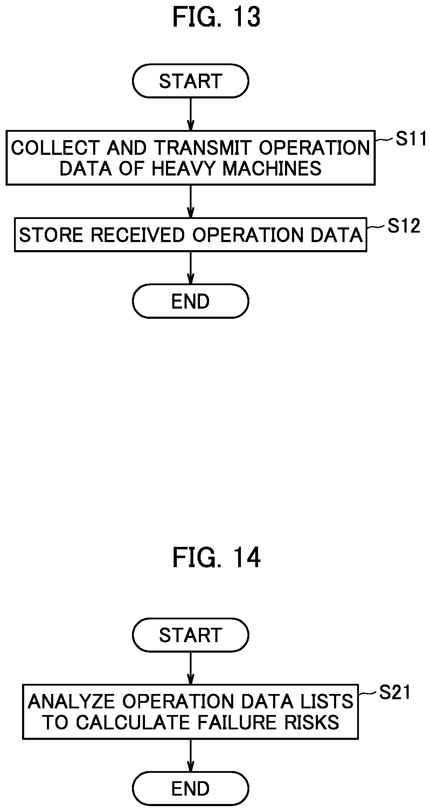

Next, a flow about collection of operation data of the heavy machines 2 will be described with reference to FIG. 13. FIG. 13 shows the operation data acquisition flow in the present embodiment.

First, at step S11, the operation data collection unit 2b of each heavy machine 2 acquires sensor information from various kinds of sensors mounted on the heavy machine 2 to collect operation data of the heavy machine 2. After that, the operation data collection unit 2b of the heavy machine 2 transmits the collected operation data to the server 3 via the communication satellite 6, the base station 7 and the communication circuit 5.

Next, at step S12, the operation data storage processing unit 11 of the server 3 stores the received operation data into the operation data history table 21. The operation data stored in the operation data history table 21 includes the model of the heavy machine 2, content of work for each model number, a date, a place and the like.

Next, a flow about calculation of failure risks of each heavy machine 2 will be described with reference to FIG. 14. FIG. 14 shows the failure risk calculation flow in the present embodiment. In the failure risk calculation flow, the failure risk calculation unit 12 performs analysis by referring to the operation data lists stored in the operation data history table 21 to calculate failure risks (step S21). After that, the failure risks calculated by the failure risk calculation unit 12 is stored into the failure risk data table 22.

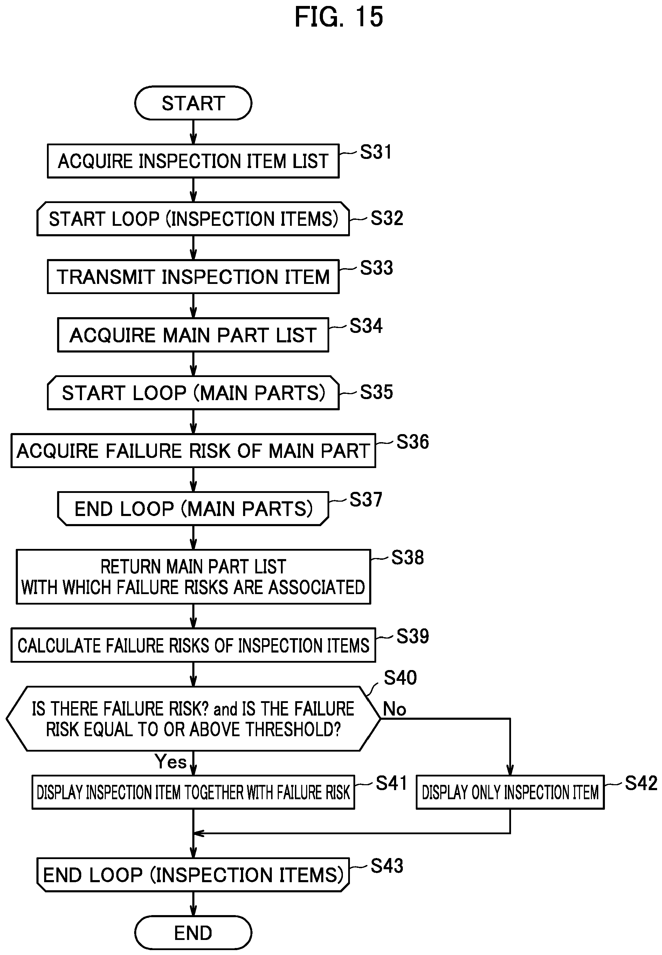

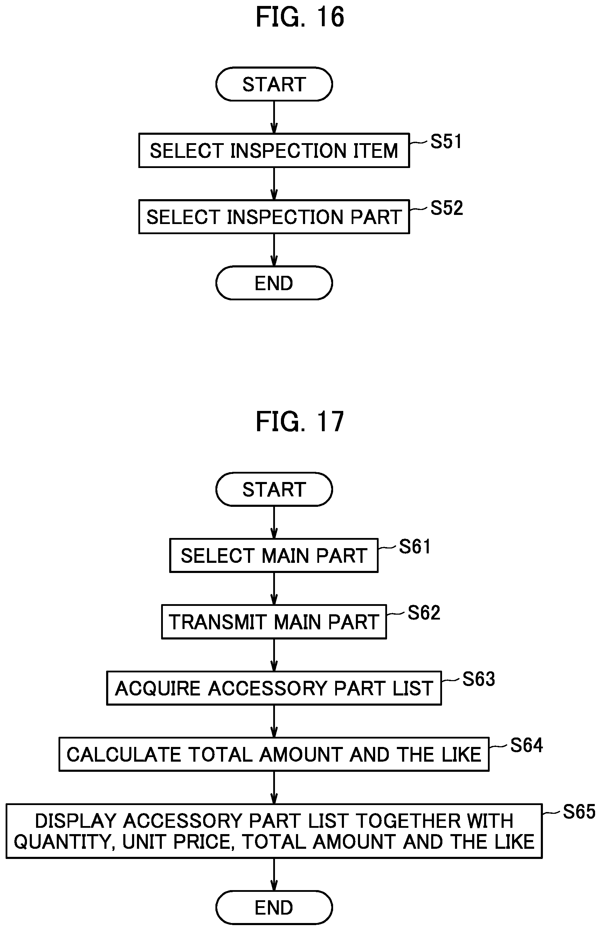

Work performed and content displayed on the mobile terminal 4 side, and a process on the server 3 side when the worker W inspects the heavy machine 2A will be described with reference to FIGS. 15 to 17. FIG. 15 shows a process flow until inspection items are displayed on the inspection item screen 34 of the mobile terminal 4. FIG. 16 shows a process flow performed when the worker W inspects the heavy machine 2A. FIG. 17 shows a process flow performed on the server 3 side after the inspection by the worker W.

First, the inspection item list acquisition unit 14 acquires an inspection item list of the heavy machine 2A which is an inspection target machine. Specifically, the worker W operates the mobile terminal 4 to select an inspection item of the heavy machine 2A from the inspection item list stored in the storage unit 32 to acquire the inspection item list of the heavy machine 2A (step S31).

Next, the process of step S31 is repeated for each of a plurality of inspection items (step S32). In other words, the following process (steps S33 to S43) is performed for each of the inspection items.

First, the worker W operates the mobile terminal 4 to transmit the inspection item about the heavy machine 2A to the inspection item list acquisition unit 14 via the communication circuit 5 (step S33). Note that, if the inspection item list does not exist on the mobile terminal 4 side, information about the model or model number of the heavy machine 2A is transmitted to the inspection item list acquisition unit 14 via the communication circuit 5 instead of inspection items. In this case, the inspection item list acquisition unit 14 refers to the inspection item data table 23 and acquires an inspection item list corresponding to the received information.

Next, the main part list acquisition unit 15 refers to the inspection item/main part correspondence table 24 and acquires a main part list corresponding to the inspection item of the heavy machine 2A supplied from the inspection item list acquisition unit 14 (step S34). For example, if "damage of hydraulic cylinder, scratches, transformation and oil leakage of rod" in FIG. 4 is received as the inspection item, "bucket cylinder", "arm cylinder" and "boom cylinder" are extracted from the inspection item/main part correspondence table data shown in FIG. 5 as main parts.

Next, for the plurality of main part lists, the process of step S34 is repeated for each of the main part (step S35). In other words, the following process (steps S36 and S37) is performed for each of the main parts.

Specifically, a failure risk is acquired for each of the main parts acquired at step S34 (step S36). In other words, the failure risk acquisition unit 13 refers to the failure risk data table 22 and acquires the failure risks of the main parts supplied from the main part list acquisition unit 15. For example, if "bucket cylinder", "arm cylinder" and "boom cylinder" have been acquired as the main parts, the three risks, "comprehensive: 8", "abrasion: 3" and "sudden: 8" about "arm cylinder" and the three risks, "comprehensive: 6", "abrasion: 6" and "sudden: 2" about "bucket cylinder" in FIG. 3 are acquired. Note that, if no failure risks are stored about "boom cylinder", no failure risks of "boom cylinder" are acquired.

Next, when acquisition of the failure risks of all the main parts acquired at step S34 are completed, and the repeated process ends (step S37), the main part list acquisition unit 15 associates the acquired main parts with the failure risks supplied from the failure risk acquisition unit 13 and transmits the associated information (a main part list) to the mobile terminal 4 via the communication circuit 5 (step S38). In other words, the main part list acquisition unit 15 transmits the information about the main parts, classifications and risks in FIG. 3 to the mobile terminal 4.

Next, the arithmetic processing unit 31 of the mobile terminal 4 calculates a failure risk for each of the inspection items transmitted from the mobile terminal 4 to the server 3, using the received information (the information in which the main part list and the failure risks are associated) (step S39). Specifically, for the inspection item of "damage of hydraulic cylinder, scratches, transformation and oil leakage of rod", "bucket cylinder", "arm cylinder" and "boom cylinder" are received as main parts; and, if risks of "comprehensive: 8", "abrasion: 3" and "sudden: 8" are associated with "arm cylinder", and risks of "comprehensive: 6", "abrasion: 6" and "sudden: 2" are associated with "bucket cylinder", then "8", the largest numerical value of the risk, is calculated as the failure risk of the inspection item.

If a risk is not associated with any of the main parts, the inspection item is treated as having no risks or as an inspection item the failure risks of which are not known. Note that the calculated risk may be stored into the storage unit 32 so that the stored risk can be read out and used in another process.

Next, for each inspection item, the arithmetic processing unit 31 of the mobile terminal 4 determines whether or not the failure risk calculated at step S39 exists, and the failure risk is equal to or above a threshold (step S40). In the case of Yes at step S40, the relevant inspection item is displayed on the inspection item screen 34 together with the calculated failure risk (step S41). In the case of No at step S40, only the relevant inspection item is displayed on the inspection item screen 34 (step S42). Specifically, when the predetermined threshold is set to "5", a failure risk is not displayed for the inspection items of "looseness and damage of exhaust pipe and muffler mounted part", "operation, unusual sound and oil leakage of supercharger" (risk 3), "dirt and drainage of fuel filter" and "cracks, transformation and damage of boom, arm and link" for which a failure risk equal to or above the threshold 5 has not been calculated, and a failure risk is displayed for the inspection item of "damage of hydraulic cylinder, scratches, transformation and oil leakage of rod" (risk 8) for which a failure risk equal to or above the threshold 5 has been calculated as shown in FIG. 9.

Then, when the above process has been performed for all the inspection items acquired at step S31, the repeated process ends (step S43), and the present flow ends.

Next, the worker W refers to inspection item information displayed on the inspection item screen 34 of the mobile terminal 4 at the time of inspecting the heavy machine 2A. For example, if grasping that an inspection item with the highest failure risk among the inspection items shown in FIG. 9 is "damage of hydraulic cylinder, scratches, transformation and oil leakage of rod", the worker W starts inspection of members related to "damage of hydraulic cylinder, scratches, transformation and oil leakage of rod" and efficiently performs the inspection in such order that an item for which a failure occurs most easily comes first.

After that, if a part determined to have a problem is found as a result of the inspection, the worker W selects the inspection item (step S51). For example, if a member that may possibly have a trouble is found among members related to "damage of hydraulic cylinder, scratches, transformation and oil leakage of rod", the inspection item is selected. On the other hand, if it is determined that there are no problems as a result of the inspection, inspection of members related to other inspection items is performed. If a part having a problem is found, the inspection item is selected.

Next, when the inspection item determined to have a problem is selected, main parts related to the selected inspection item are displayed on the main part list screen 35 as inspection parts. For example, if "damage of hydraulic cylinder, scratches, transformation and oil leakage of rod" in FIG. 9 is selected at step S51, "boom cylinder", "arm cylinder" and "bucket cylinder" are displayed as inspection parts corresponding to the inspection item as shown in FIG. 10. Here, if a failure risk exists in a main part which is an inspection part, the highest failure risk is displayed. Note that if a failure risk is below a predetermined threshold (for example, a threshold of 5), the failure risk may not be displayed.

Then, the worker W performs more detailed inspection with reference to inspection parts displayed on the main part list screen 35. In other words, the worker W preferentially inspects a main part with a high failure risk among the inspection parts. Thereby, work efficiency is improved. For example, the worker W preferentially performs inspection of "arm cylinder" with the highest failure risk first among "boom cylinder", "arm cylinder" and "bucket cylinder" shown in FIG. 10. Then, the worker W finally selects parts having a problem as a result of the inspection, as inspection parts (step S52).

Note that, if, before selecting an inspection item at step S51, the worker W does not know parts related to the inspection item, he may select the inspection item first and start inspection of the heavy machine 2A with reference to an inspection parts displayed on the main part list screen 35.

Next, when the worker W selects a main part having a problem (an inspection item) (step S52 of FIG. 16; step S61 of FIG. 17) after inspection of the heavy machine 2A, the arithmetic processing unit 31 of the mobile terminal 4 transmits information about the main part to the server 3 via the communication circuit 5 (step S62). When receiving the information about the main part, the accessory part list acquisition unit 16 of the server 3 refers to the main parts/accessory parts correspondence table 25 and acquires an accessory part list corresponding to the main part (step S63).

After that, the accessory part list acquisition unit 16 transmits the acquired accessory part list to the mobile terminal 4 via the communication circuit 5. Then, the arithmetic processing unit 31 of the mobile terminal 4 calculates a total amount of the main parts and accessory parts proposed to be replaced, from the received accessory part list (step S64). Then, the arithmetic processing unit 31 of the mobile terminal 4 displays desired information, such as names, quantities, unit prices and a total amount of the accessory parts, on the accessory part list screen 36 together with the accessory part list (step S65). Here, the worker W considers the content displayed on the accessory part list screen 36 and creates a proposal by removing unnecessary parts from the selection and changing quantities.

As for the proposal, data required for creating the proposal is transmitted to the server 3 by the worker W pressing a proposal creation button of the mobile terminal 4, and the proposal digitization processing unit 17 of the server 3 creates the proposal. Then, the proposal created by the proposal digitization processing unit 17 is transmitted to the mobile terminal 4 and stored into the existing proposal data table 26.

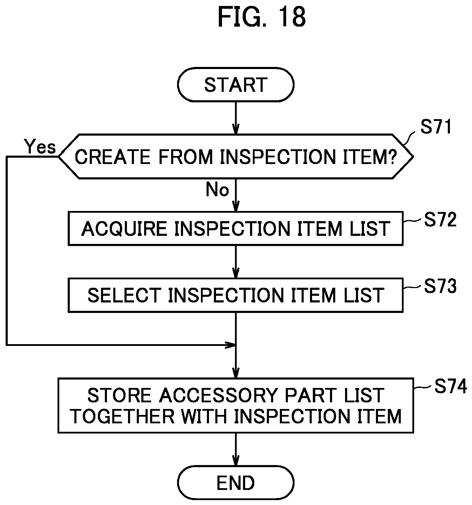

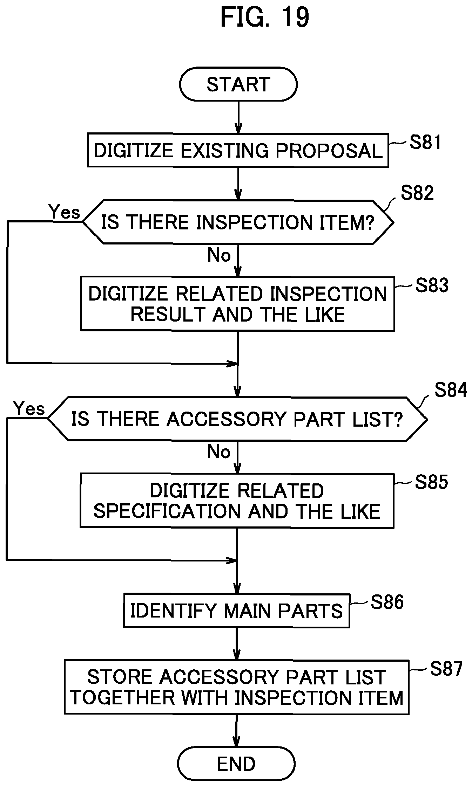

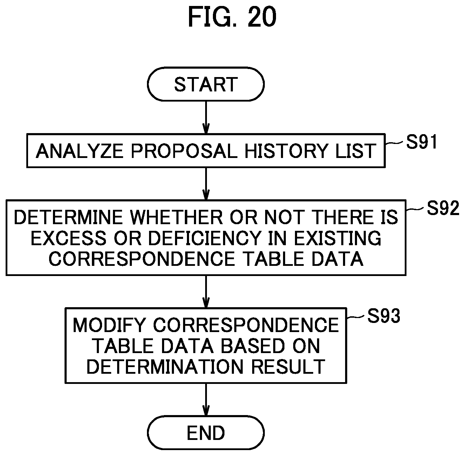

Next, a process flow about maintenance support of the inspection item/main part correspondence table data will be described with reference to FIGS. 18 to 20. Here, FIG. 18 is a process flowchart about a proposal history creation method in the server 3. FIG. 19 is a process flowchart about another proposal history creation method in the server 3. FIG. 20 shows a specific maintenance process flow of the inspection item/main part correspondence table data in the server 3.

First, a process on the mobile terminal 4 differs depending on whether or not to create a proposal using an inspection item and related information, which are displayed on the accessory part list screen 36 by the above process by the worker W. In the case of not using the inspection item displayed on the accessory part list screen 36 by the above process by the worker W (step S71: No), the arithmetic processing unit 31 acquires an inspection item list from the inspection item data table 23 of the storage unit 32 or the server 3 (step S72). After that, the acquired inspection item list is displayed on the accessory part list screen 36 of the mobile terminal 4, and the worker W selects a desired inspection item (step S73).

In the case of creating a proposal using the inspection item and the related information, which are displayed on the accessory part list screen 36 by the above process by the worker W (step S71: Yes) and in the case of an inspection item being selected after steps S72 and S73, the proposal storage processing unit 18 stores the accessory part list (including the main part list) into the proposal history table 28 together with the inspection item, the model, the model number and the date as shown in FIG. 8 (step S74). Note that, accompanying the storage of the proposal history, creation of the proposal itself is performed.

On the other hand, in the case of performing processing by restoration of a proposal existing in the existing proposal data table 26, the proposal digitization processing unit 17 digitizes the proposal existing in the existing proposal data table 26 (step S81). After that, if there is not an inspection item in the digitized proposal (step S82: No), a process of the proposal digitization processing unit 17 digitizing a related inspection result and the like is performed (step S83).

Next, if an inspection item exists in the proposal at step S82 (step S82: Yes) and in a case where the process of step S83 is performed, it is determined whether there is an accessory part list in the proposal or not (step S84). If the accessory part list does not exist in the proposal (step S84: No), a process of digitizing a related specification and the like is performed (step S85).

Next, if an accessory part list exists in the proposal at step S84 (step S84: Yes) and in a case where the process of step S85 is performed, the proposal storage processing unit 18 refers to the main part master table 27 and identifies main parts related to the inspection item of the proposal (step S86). After that, the proposal storage processing unit 18 stores the accessory part list into the proposal history table 28 together with the inspection item (step S87).

Then, the proposal analysis unit 19 analyzes the proposal history list stored in the proposal history table 28 (step S91). Specifically, the proposal analysis unit 19 analyzes the frequency of "an inspection item" and "a main part" appearing in the list, being associated with each other. Furthermore, the proposal analysis unit 19 determines whether or not there is excess or deficiency in the existing proposal history list stored in the inspection item/main part correspondence table 24 (step S92). In other words, the proposal analysis unit 19 determines whether the calculated frequency of appearance is smaller or larger than a predetermined number of times within a predetermined period.

After the determination, the proposal analysis unit 19 modifies the existing proposal history list based on a determination result (step S93). Specifically, if the frequency of appearance calculated at step S92 is smaller than the predetermined number within the predetermined period, the proposal analysis unit 19 updates the inspection item/main part correspondence table 24 and eliminates the correspondence relationship between the relevant "inspection item" and "main part". On the other hand, as for a part that is not written being associated with a predetermined inspection item and the appearance frequency of which is large in the existing proposal history list, modification of adding the part as main part is performed.

Note that, in the case of performing the above modification, the information shown in FIG. 12 may be displayed on the correspondence table data maintenance screen 43 of the fixed terminal 8 to cause the user of the fixed terminal 8 to select whether the information is to be updated or not.

As described above, the server 3, which is the selection system according to the present embodiment, has the inspection item/main part correspondence table 24 in which inspection items of the heavy machines 2 and main parts which are service parts of the heavy machines 2 are associated, the inspection item list acquisition unit 14 that acquires an inspection item list of the heavy machine 2A from information about the heavy machine 2A received from the mobile terminal 4, and the main part list acquisition unit 15 that acquires a main part list in which main parts are enumerated being associated with each inspection item of the heavy machine 2A, based on information stored in the inspection item/main part correspondence table 24. Further, the main part list acquisition unit 15 transmits the acquired main part list to the mobile terminal 4 via the communication circuit 5 as main part selection information.

Therefore, only by the worker W transmitting inspection work to the server 3 at the time of performing the inspection work for each heavy machine 2, the server 3 can provide optimal main part candidates for the worker W as selection information. Then, the worker W who has obtained the selection information can easily perform inspection and is enabled to appropriately order main parts, by performing the inspection work according to the selection information without depending on his own know-how. In other words, the server 3 according to the present embodiment can enhance appropriateness of selection of service parts of each heavy machine 2 and enables ordering of the parts without excess or deficiency, without depending on the know-how of worker W, so that promptness of maintenance work for the work machines 2 can be improved.

Further, the server 3, which is the selection system according to the present embodiment, calculates failure risks of each heavy machine 2 and supplies the failure risks to the mobile terminal 4 as the selection information, associating the failure risks with main parts. Therefore, by referring to the failure risks at the time of inspecting the heavy machine 2, the worker W can further improve promptness of maintenance work for the heavy machine 2.

Furthermore, the server 3, which is the selection system according to the present embodiment, includes information about accessory parts into the selection information in addition to the main parts, as information about service parts of the heavy machine 2A. Therefore, the worker W can easily obtain additional information required to increase appropriateness of selection of service parts of the heavy machine 2, and, therefore, he can select service parts more certainly without depending on his own know-how.

The server 3, which is the selection system according to the present embodiment, further has an analysis unit that updates information stored in the inspection item/main part correspondence table 24 according to past inspection results. Therefore, the server 3, which is the selection system according to the present embodiment, can provide such information that accuracy of relations between inspection items and main parts is increased more, and can increase appropriateness of selection of service parts of the heavy machine 2 by the worker W more.

### <Aspects of the present invention>

A work machine service part selection system according to a first aspect of the present invention is a work machine service part selection system including a server, the server providing selection information about service parts for an inspection target machine, which is a work machine and is to be an inspection target, to a terminal via a communication circuit, wherein the server includes: an inspection item/main part correspondence table in which inspection items of the work machine and main parts of the work machine are associated; an inspection item list acquisition unit acquiring an inspection item list of the inspection target machine based on information about the inspection target machine received from the terminal; and a main part list acquisition unit acquiring a main part list in which the service parts are enumerated, being associated with the inspection items of the inspection target machine, based on the inspection item/main part correspondence table; wherein the main part list acquisition unit transmits the acquired main part list to the terminal via the communication circuit as the selection information about the service parts.

In the work machine service part selection system according to a second aspect of the present invention, the main part list acquisition unit can acquire a failure risk for each of the service parts enumerated in the main part list and transmit the failure risk to the terminal, including the failure risk in the selection information about the service parts.

In the work machine service part selection system according to a third aspect of the present invention, the server can further include: a main parts/accessory parts correspondence table in which the main parts of the work machine and accessory parts are associated; and an accessory part list acquisition unit acquiring an accessory part list in which the accessory parts are enumerated, being associated with the main parts of the inspection target machine, based on the main parts/accessory parts correspondence table; wherein the accessory part list acquisition unit can transmit the acquired accessory part list to the terminal via the communication circuit as the selection information about the service parts.

In the work machine service part selection system according to a fourth aspect of the present invention, the server can further include an analysis unit analyzing frequency of each of the inspection items and each of the main parts appearing, being associated with each other, in past inspection results and updates the inspection item/main part correspondence table according to an analysis result.

### Explanation of Reference Signs

- 1: Inspection system
- 2: Heavy machine (work machine)
- 2A: Heavy machine (inspection target machine)
- 2b: Operation data collection unit
- 3: Server
- 3a: Processing unit
- 3b: Storage unit
- 4: Mobile terminal
- 5: Communication circuit
- 6: Communication satellite
- 7: Base station
- 8: Fixed terminal
- 11: Operation data storage processing unit
- 12: Failure risk calculation unit
- 13: Failure risk acquisition unit
- 14: Inspection item list acquisition unit
- 15: Main part list acquisition unit
- 16: Accessory part list acquisition unit
- 17: Proposal digitization processing unit
- 18: Proposal storage processing unit
- 19: Proposal analysis unit
- 21: Operation data history table
- 22: Failure risk data table
- 23: Inspection item data table
- 24: Inspection item/main part correspondence table
- 25: Main parts/accessory parts correspondence table
- 26: Existing proposal data table
- 27: Main part master table
- 28: Proposal history table
- 31: Arithmetic processing unit
- 32: Storage unit
- 33: Display unit
- 34: Inspection item screen
- 35: Main part list screen
- 36: Accessory part list screen
- 41: Arithmetic processing unit
- 42: Display unit
- 43: Correspondence table data maintenance screen
- W: Worker

## Claims

1. A work machine service part selection system comprising a server, the server providing selection information about service parts for an inspection target machine, which is a work machine and is to be an inspection target, to a terminal via a communication circuit, wherein
the server comprises:
an inspection item/main part correspondence table in which inspection items of the work machine and main parts of the work machine are associated;
an inspection item list acquisition unit acquiring an inspection item list of the inspection target machine based on information about the inspection target machine received from the terminal; and
a main part list acquisition unit acquiring a main part list in which the service parts are enumerated, being associated with the inspection items of the inspection target machine, based on the inspection item/main part correspondence table; wherein
the main part list acquisition unit transmits the acquired main part list to the terminal via the communication circuit as the selection information about the service parts.

2. The work machine service part selection system according to claim 1, wherein
the main part list acquisition unit acquires a failure risk for each of the service parts enumerated in the main part list and transmits the failure risk to the terminal, including the failure risk in the selection information about the service parts.

3. The work machine service part selection system according to claim 1, wherein
the server further comprises:
a main parts/accessory parts correspondence table in which the main parts of the work machine and accessory parts are associated; and
an accessory part list acquisition unit acquiring an accessory part list in which the accessory parts are enumerated, being associated with the main parts of the inspection target machine, based on the main parts/accessory parts correspondence table; wherein
the accessory part list acquisition unit transmits the acquired accessory part list to the terminal via the communication circuit as the selection information about the service parts.

4. The work machine service part selection system according to claim 1, wherein
the server further comprises an analysis unit analyzing frequency of each of the inspection items and each of the main parts appearing, being associated with each other, in past inspection results and updates the inspection item/main part correspondence table according to an analysis result.
